# EUROPEAN PATENT SPECIFICATION

(11) **EP 2 564 918 B1**
(45) Date of publication and mention of the grant of the patent: **07.03.2018**
(21) Application number: 11179453.3
(22) Date of filing: 31.08.2011
(51) Int. Cl.: B01D 53/52, C10K 1/00, C10G 2/00

(54) **A two-stage gas washing method applying sulfide precipitation and alkaline absorption**
Zweistufiges Gasreinigungsverfahren mit Sulfidausfällung und Alkaliabsorption
Procédé de lavage de gaz à deux étages appliquant la précipitation de sulfure et l'absorption alcaline

(43) Date of publication of application: 06.03.2013
(73) Proprietor: Neste Oyj, 02150 Espoo (FI)
(72) Inventor: Wahlström, Jan, 06400 Porvoo (FI); Aittamaa, Juhani, 00920 Helsinki (FI); Eilos, Isto, 06150 Porvoo (FI); Keskinen, Kari I., 00980 Helsinki (FI); Koskinen, Jukka, 02160 Espoo (FI); Tiitta, Marja, 06150 Porvoo (FI); Vuori, Heli, 02630 Espoo (FI)
(74) Representative: Espatent Oy

(56) References cited:
- WO-A2-2008/113766
- WO-A2-2009/113006
- DE-C- 350 591
- US-A- 2 889 197
- US-A- 3 761 569
- US-A- 5 670 123
- US-A1- 2010 305 220

## Description

### Technical field

The present description is related to the field of hydrocarbon production by gasification of carbonaceous material. It provides a two-stage gas washing method as a part of syngas refining process. More specifically it discloses a method for hydrogen sulfide and carbon dioxide removal from synthesis gas produced by gasification. It introduces a use of novel combinations of wash approaches for this application involving absorption by chemical reactions. As a specific application, this process is utilized as a part of biomass to liquid (BTL) process.

### Background

In the production of hydrocarbon compositions, gasification of carbonaceous material can be utilized as the initial step. Syngas thereby obtained can be converted into hydrocarbons or derivatives thereof, by a synthesis reaction. The general reactions are known in the field. Especially, when gasifying biomass the raw material comprises, and produces as side reactions, impurities previously uncommon in the field. To optimize the yield and avoid irregularities in the refinement process, further purification process steps are required.

The gasification of carbonaceous material produces primarily carbon monoxide and hydrogen, mixture known as syngas. Also carbon dioxide, water and various hydrocarbons are abundant side products in the gasification product. Depending on the source and composition of the carbonaceous raw material and gasification conditions, the levels of side products as traces and derivatives of elements typically present as impurities vary and influence the refining strategies.

During gasification, the sulfur and its derivatives originated from biomass are mainly converted to hydrogen sulfide (H₂S) and carbonyl sulfide (COS). In comparison to coal gasification, gasifying biomass raw material produces very low levels of sulfidic, relatively low levels of nitric and low levels of ashes impurities. The level of carbon dioxide is typically higher than in coal gasification. These impurity levels are still harmful for further chemical processing and the gas must be purified. The decrease of hydrogen sulfide concentration is compulsory for the functioning of the catalysts later in the refining of the syngas. On the other hand, the carbon dioxide's role in the further reactions is basically as an inert. The reason for removing CO₂ relates to optimizing the streams and decreasing volumes of recycle flows and equipment. The strategies known from coal gasification are not readily applicable.

Together carbon dioxide, hydrogen sulfide and carbonyl sulfide are referred to as acid gas since they dissolve in water forming acids. One of the most common means for gas purification is absorption, which has been used for acid gas removal from natural and synthesis gases. When purifying biomass originated synthesis gas, absorption with a liquid solvent has shown to be more efficient than solid absorption. For physical absorption, organic solvents at cold temperatures and high pressures are common. For chemical absorption, solutions of arsenic salts, various amines and carbonates are known. Generally, the absorbent is regenerated by rising the temperature and/or releasing the pressure.

Prior art discloses effective absorbents for removing acid gas using e.g. methanol. Methanol requires low temperatures to be efficient and to avoid absorbent loss. A very well-known commercial process using methanol is desulfurization process marketed under trade name Rectisol®. The Rectisol desulfurization process does not require hydrolysis of COS to H₂S and can reduce sulfur concentrations to relatively low levels in syngas. Methanol has a high affinity for hydrocarbons as well as acid gas. It also exhibits capabilities to remove not only sulfur and CO₂ but also many relevant trace components (carbonyles, HCN), which makes Rectisol wash a useful process. The syngas is then reheated to about 350 °C and passed through a fixed bed of sulfur sorbent, such as a ZnO guard bed, to further reduce the sulfur concentration in the syngas. Large temperature differences between process phases consume a lot of energy and makes processing expensive.

In prior art, document EP 2223889 discloses a device providing further development of the multistage methanol wash as a part of Integrated Gasification Combined Cycle, IGCC. With the device disclosed, as a multistage process, this version of Rectisol process removes CO₂ as well from the gas. As a process related to power production, the purity requirements are, however, different from those applied in chemical or fuel production wherein higher purity is demanded.

Another document of prior art, US 2010163803, discloses a process for the production of gas products from a raw synthesis gas that is obtained by gasification of carbon and/or heavy oil. Origin of the gas gives it a characteristic component profile. The process description discloses how both the shifted and the unshifted gas streams are purified of sulfur components and CO₂ in sour gas washing, more specifically a cryogenic methanol washing. An apparatus suitable for the process is disclosed as well. Both sulfur components and CO₂ are removed together, the washes providing no separation of these components.

In addition to physical absorption described above, chemical absorption is known in the art. Gas containing large volumes of hydrogen sulfide can be freed from said hydrogen sulfide by first conducting the gas stream into aqueous solutions containing copper ions in water for absorbing the hydrogen sulfide and then oxidizing the copper sulfide thus formed with air or oxygen gas to produce elemental sulfur. Prior art document DE 2304497 discloses an aqueous absorption medium which contains rather high concentrations of copper ions (28.9 g Cu in 1400 ml water), and absorption of the hydrogen sulfide carried out by bubbling the gas into the aqueous medium.

Another document representing prior art, EP0986432 B1, discloses a method for selective hydrogen sulfide removal from gases comprising both H₂S and CO₂. When these components were present in the gas in CO₂ to H₂S ratio of 2:1, the method removed 99 % of the H₂S selectively. However, when said ratio was 200:1, the H₂S removal was 95 %.

US2889197 discloses a two-step process for removal of both H₂S and CO₂ from synthetic gas. The first step for binding H₂S uses aqueous solution of ammonia containing a salt, such as iron sulphide, which reacts leading to precipitation of ammonium sulphate. Ammonia is used as the binder of H₂S in conditions expressly stated to be alkaline. A strong motivation for this process is production of valuable side products, i.e. ammonium nitrate. As a second step, the removal of carbon dioxide from synthetic gas in D1 is based on a wash with a salt forming carbonate, for instance sodium carbonate, again in the presence of ammonia.

There still is a need for an alternative method for removal of sulfur components and carbon dioxide from syngas obtainable by gasification of carbonaceous material, especially when gasifying biomass. Further, there is a need to remove sulfur components and carbon dioxide from the syngas in an energy efficient way. There also is a need for an effective combined sulfur component and carbon dioxide removal. Yet, there is constant need for simplification, increase of the effectiveness and identification of possibilities for synergism of the overall BTL process.

### Summary of the invention

The present inventors have surprisingly found that a washing method comprising two different chemical absorption steps provides high purity product with lower energy consumption than prior art methods. As the first aspect, a method for washing hydrogen sulfide and carbon dioxide from a gas obtainable by gasification of carbonaceous biomass is provided, comprising:
a. contacting said gas with a first absorbent solution comprising transition metal ions, said transition metal selected from copper, zinc, iron and cobalt and mixtures thereof, in acidic aqueous solution;
b. binding hydrogen sulfide to said first absorbent solution;
c. recovering the gas from step b;
d. contacting recovered gas from step c with a second absorbent solution comprising an alkaline absorbent; and
e. binding carbon dioxide to said second absorbent solution;
f. recovering the washed gas from step e.

One advantage provided by this method is related to process design. When applying two chemical absorption steps, the need for thermal conditioning and heat exchange equipment, especially for cooling, is significantly reduced compared to processes using physical absorption, e.g. methanol washes. Moreover, the energy consumption is smaller. As the present method is especially suitable for washing biomass derived syngas, the wash combination, especially at given sequence provides efficient treatment for gas having high CO₂ and H₂S mole concentrations. This method has proven to produce washed gas having a H₂S level of less than 20 ppb, and even lower levels, less than 1 ppb.

As the second aspect, when used as a part of a biomass to liquid process, the washing method is applied among the other process steps providing an improved method for producing hydrocarbons or derivatives thereof. The method then comprises the steps:
i. gasifying the biomass raw material in the presence of oxygen to produce a gas comprising carbon monoxide, carbon dioxide, hydrogen and hydrocarbons;
ii. optionally a tar reforming step
iii. optionally removing tar components from the gas;
iv. optionally adjusting the hydrogen to carbon monoxide ratio;
v. washing according to claim 1;
vi. converting in a synthesis reactor at least a significant part of the carbon monoxide and hydrogen contained in the gas into a product selected from hydrocarbon composition and derivatives thereof; and
vii. recovering the hydrocarbon or derivative thereof as the product.

When the synthesis of step vi is Fischer-Tropsch (FT) synthesis, the wash protocol of step v reduces the levels of acid gases in the feed of FT synthesis process to levels as low as 20 ppb meeting requirements for FT catalysts, and the level of CO₂ is low enough to prevent accumulation thereof in the process.

### Brief description of the figures

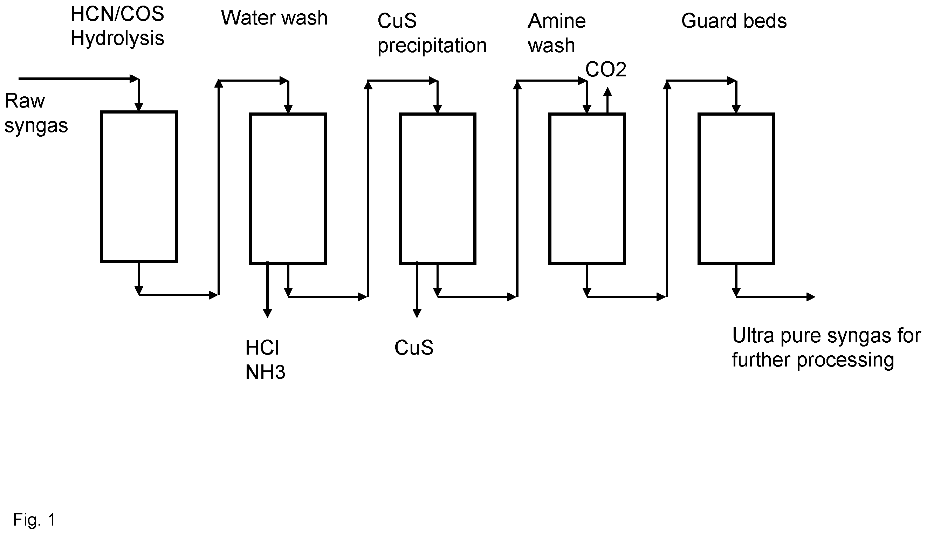

Figure 1 discloses a simple flow diagram of an embodiment of the method of the present invention for H₂S and CO₂ removal by a two stage process.

### Detailed description of the invention

Herein is provided a novel method for washing of hydrogen sulfide (H₂S) and carbon dioxide (CO₂ from a gas obtainable by gasification of carbonaceous biomaterial. Characteristic for this method is that it involves two consequent washes, both based on chemical absorption but involving different reactants and reaction strategies. The first wash comprises
a. contacting said gas with a first absorbent solution comprising transition metal ions, said transition metals selected from copper, zinc, iron and cobalt and mixtures thereof, in aqueous solution;
b. binding hydrogen sulfide to said first absorbent solution;
c. recovering the gas from step b;

The first wash removes selectively hydrogen sulfide from the gas. The removal efficiency is high. At least 90 %, preferably at least 95 % of the hydrogen sulfide present in the feed can be removed in this step.

The second wash comprises
d. contacting recovered gas from step c with a second absorbent solution comprising an alkaline absorbent:
e. binding carbon dioxide to said second absorbent solution:
f. recovering the washed gas from step e.

The second wash principally removes carbon dioxide. As the concentration of hydrogen sulfide has already been considerably diminished in the first wash step, the absorbing capacity of the alkaline absorbent can be used mainly for the carbon dioxide removal. The inventors have found that the hydrogen sulfide concentration is further lowered in the second wash providing recovered gas of such a high purity, that in some cases guard beds removing H₂S prior to synthesis reactions can be omitted.

When applying the method of the present invention, the selection of the conditions for the second wash can be less stringent than when applying corresponding alkaline absorbent detached. Preferably the second absorbent solution is applied as an aqueous amine wash, carbonate wash, carbonate precipitation or a combination thereof. The temperature, pressure, recycling etc. need not to be pushed to extremes to obtain desired purity levels.

Yet another benefit of the present invention is that when applying sequential removal of H₂S first and CO₂ after that, these processes are to some extent independent from each other. Especially, the second wash step can be steered to purity level required by the following processing without compromising the ultraclean character of the first absorption step. Thus independent control of the removal of acid gases is possible through the present method.

As used herein, "absorbent solution" refers to a wash liquid used for washing the gas. For processing purposes, as fresh, it is preferably a true solution, thus all components are dissolved in the solvent, here aqueous solutions. A person skilled in the art understands, that when used, especially when there has been a chemical reaction involved, said absorbent solution may contain solids or precipitates.

With "binding a gas (hydrogen sulfide or carbon dioxide) to an absorbent solution" is meant basically absorption of said gas to said solution. It includes all phases of absorption, material transfer from gas to gas-solvent interface, shift from gas to liquid phase, and in the case of a chemical absorbent the chemical reaction in question.

The two stage method removes preferably at least 99 vol-%, preferably at least 99.9 vol-% of the H₂S present in the feed gas. Of the carbon dioxide, the removal is at least 90 vol-%, preferably at least 95 vol-% of the CO₂ present in the feed gas.

When describing the process, measurements and results, the proportions given are percentages of the total gas volume of the dry gas unless otherwise stated.

An illustration of the method is given in Figure 1, which discloses a simple flow sheet of an embodiment of the method of the present invention for H₂S and CO₂ removal by a two stage process. In the figure, the raw syngas is fed to an optional hydrolysis reactor, which removes HCN and COS, followed by an optional water wash reactor, from the outlet of which aqueous HCl and NH₃ are removed. The essence of the invention lies within the next two reactors. The first of these is a reactor named in the figure as CuS precipitation unit. In said reactor, the gas is contacted with dilute aqueous as CuSO₄ solution. With sulfides originating from gaseous hydrogen sulfide, copper forms CuS, which is very poorly soluble in water and precipitates out of the solution.

Gas thus recovered is next led to alkaline absorption unit to remove CO₂. Aqueous alkaline absorbents have good capacity to remove acid gases, but as major part of gaseous hydrogen sulfide has already been removed in the preceding step, the unit is designed for CO₂ removal mainly.

Optionally a guard bed (Figure 1) or multiple guard beds can be added downstream of the units, for safety and abnormal situations.

According to the embodiment described in Figure 1, the gas is fed to the absorber from a gas scrubber. The first absorption step in acidic aqueous solution can preferably be performed at the same temperature as said scrubbing, as well as the second wash with alkaline absorbent solution.

The combination of first and second absorbents according to claim 1 has surprisingly proven to allow separate recovery of CO₂ and H₂S providing savings in energy consumption in comparison to one step methanol wash when removing both H₂S and CO₂. When judged against methanol wash requiring sub-zero conditions, the present method provides substantial benefit with regard to operating temperature and energy consumption and cooling equipment requisites thereof.

### Feed characteristics

When refining syngas obtainable from gasification of biomass the acid gases consist mainly of H₂S, CO₂ and COS. As an example of a typical composition, the gas composition fed to acid gas wash comprises as main components (calculated of the dry gas) from 20 to 40 vol-% H₂, from 10 to 30 vol-% of CO, and as acid gas impurities from 50 to 400 ppm H₂S, from 20 to 40 vol-% CO₂ and 5 to 50 ppm COS along with other traces.

Special characteristics for refining gas originated from biomass are the high CO₂ and H₂S concentrations. If there is a need to recover these components separately, the prior art references suggest using physical absorption, as chemical absorbents tend to remove CO₂ and H₂S simultaneously.

### Transition metal ions

In the method for washing hydrogen sulfide and carbon dioxide from a gas obtainable by gasification of carbonaceous biomass, the first step of this method comprises first contacting said gas with a first absorbent solution comprising transition metal ions in acidic aqueous solution.

This step is efficient for H₂S removal. The present inventors found that transition metal ions, for example Cu²⁺ ions, react fast with H₂S in liquid at even very small metal ion concentrations. The results were first evidenced in patent application EP111153704 (not yet published) disclosing a method of purifying gasification gas (syngas) by absorbing impurities of syngas in a liquid absorption medium containing metal ions capable of binding sulfide ions into solid sulfides which have low solubility and which can therefore be precipitated from the solution. Thus, said metal ions preferably predominantly bivalent transition metal ions have effect of binding sulfides, present as H₂S in the gas phase, from gas to said first absorbent solution. When reacted with this solution, the gas is recovered for further processing.

Another prior art document, EP0986432 B1, discusses the theory, especially the precipitation characteristics exhaustively from paragraph 27 to paragraph 43.

However, now the inventors have further developed the idea and proved that when transition metal ion absorption for H₂S removal, as the first wash, is combined with an alkaline absorption for CO₂ removal, said absorptions together provide unexpected synergism.

This first step is carried out by contacting the gas with the first absorbent solution, thus an acidic aqueous wash solution containing transition metal ions capable of binding to sulfide ions of the sulfide compounds present in the gas. The concentration of the transition metal cations is small, for example the aqueous solution has a molar strength in respect of the transition metal ions of about 0.00001 to 0.01 M. A significant portion of the sulfide impurities present and contained in the gas can be converted into transition metal sulfides. The sulfides thus formed are preferably precipitated, whereby the sulfide impurities are removed from the gas. The purified gas so obtained is recovered from the aqueous solution.

The metal ions, i.e. cations, of the wash solution are derived from transition metals selected from copper, zinc, iron and cobalt and mixtures thereof. Preferably the wash solution comprises bivalent metal cations (Me²⁺) of copper (Cu²⁺), zinc (Zn²⁺) or iron (Fe²⁺) or mixtures thereof, because these cations react with sulfides (S²⁻) forming salts with very low solubility in water. In practice, most suitable salts used as metal cation sources comprise traces of other metal derivatives as well, e.g. commercial CuSO₄ salt comprises also some monovalent copper, as Cu₂SO₄. Copper has proven cost efficient and shown successful in experimental studies, especially when added as CuSO₄.

The transition metal ions are obtained from water soluble metal salts by dissolving said salts in water. In one embodiment, the aqueous solution is prepared by dissolving about 1 to 1000 parts, preferably about 50 to 500 parts by weight of a metal salt into 1,000,000 parts by weight of water.

When applied to H₂S removal from syngas obtainable from biomass gasification, typically the concentration of the metal ion compound of the wash solution can be lower than about 1000 weight-ppm, preferably lower than 100 weight-ppm, calculated from the weight of the absorption liquid. This allows for very effective and profitable integrated process concept for removal of H₂S and other impurities mentioned above from syngas.

The molar strength of Me²⁺ ions in the aqueous wash solution is typically about 0.05 mM to 5 mM per litre, preferably about 0.1 to 1 mM per litre.

In a preferred embodiment, the aqueous wash solution is acidic or weakly acidic; preferably it has a pH of about 1 to 6.5, in particular about 1 to 5. The pH will vary within the indicated range depending on the metal cations. For example, in the embodiment in which metal cation source is CuSO₄, the aqueous solution has pH of at least about 3, preferably pH from 4 to 5.

Generally, the gas is contacted with the wash solution at a temperature from 10 to 80 °C and at a pressure from 1 to 40 bar (absolute pressure). Thus, the washing can be carried out at ambient temperature and pressure (20 to 25 °C and 1 bar(a)), although it is equally possible to work the present technology at lower temperatures (10 to <20 °C) and at elevated temperatures (>25 to 80 °C). The pressure can be in excess of 1 bar(a), for example about 1.5 to 40 bar(a). As both the first absorption step and second absorption step are based on chemical absorption, the need for cooling and thus energy consumption are not as high as it would be for physical absorption.

Typically, the syngas obtained from gasification is recovered at higher temperature than indicated in the preceding. Therefore, in one embodiment, the gasification gas is cooled to a temperature in the above indicated range (10 to 80 °C) before being contacted with the washing liquid. When the temperature is higher than 80 °C the reaction is fast, but the precipitate is formed as fine particles which are difficult to recover from the wash liquid. If the temperature is below 10 °C, the need for cooling raises the operating costs. It is possible to recover some of the heat contained in the gasification gas by contacting it with a cooling media, for example with cooling water, in a heat exchanger.

Under these conditions, also acidic compounds, such as hydrogen chloride, may be absorbed. Further, the aqueous, metal ions containing solution can be applied in acidic form. Thus, it will be capable of absorbing further impurities, such as ammonia (NH₃) and hydrogen chloride (HCl) as well as other alkaline and acidic impurities. For the overall process, this is a further advantage.

The ratio of metal cations to sulfide compounds of the gas to be purified (i.e. Me²⁺/S²⁻ ratio of the feed) is typically in excess of 1, preferably from about 1.4 to about 6. Surprisingly, the use of metal ions is efficient and no great excess is needed, because the reaction proceeds nearly irreversibly as precipitated MeS exits the solution.

### Process equipment

Technically, said contacting gas with a first absorbent solution comprising transition metal ions in aqueous solution may be implemented in tray or packed column and/or applied by spraying or atomizing. In a first preferred embodiment, the contacting of the syngas with the absorption medium takes place by spraying or atomizing the absorption medium into the gas. Preferably, the contacting of the syngas with the absorption medium takes place in the interface between the gas and droplets of the absorption medium. In a second preferred embodiment, the gas to be purified is bubbled into a stirred tank containing the absorption solution. In a third embodiment, absorption towers with plates and/or packing can be used in a counter-current operation. The detailed equipment type depends on the concentration of the metal ions in the solution and the amount and impurity content of the gas. One way of performing the chemical absorption process is to use the chemical spray absorption concept combined with sieve tray(s) above the spray chamber section(s) as described and shown in Figure 6 of application EP11153704.9.

Thus, in one particular embodiment based on the spray chamber approach, the wash solution is contacted with the gas in a spray chamber having an essentially vertical central axis, said gas being fed into the spray chamber from the bottom or from the top and withdrawn from the opposite end so as to advance along the central axis of the spray chamber. The wash solution is fed through spray nozzles arranged in at least two spray zones arranged in series along the central axis at different heights in the spray chamber. The gas is fed into a spray chamber, for example of the preceding type, via gas distributors arranged below the lowest spray zone, and the metal sulfide is withdrawn from the reactor along with the used wash liquid via an outlet arranged in the bottom part of the chamber.

After absorption, the metal sulfide is precipitated as MeS-crystals (for example CuS) and separated by filtration from wash liquid effluent and taken to further treatment.

After adsorption of the sulfides, MeS-crystals and other solids are separated from circulated aqueous wash liquid.

A transition metal ion washing unit can also consist of two Me²⁺-water wash sections, wherein the upper one is operated with a rather high Me²⁺-ion concentrated liquid wash and the second one with dilute aqueous Me²⁺-wash. The necessary amount of Me²⁺-ions is fed in the form of a aqueous Me²⁺-solution into the upper wash section and circulated. Synthesis gas from the lower wash section will be fed into the upper wash section where almost all of H₂S in synthesis gas will be removed by counter current wash.

The purification results using transition metal ions in aqueous washing liquids are very good. The present method is capable of removing a significant portion of the hydrogen sulfide from the gas. At least 95 % by volume, preferably at least 98 % by volume, advantageously at least 99.5 % by volume, of the hydrogen sulfide is removed from the gas. As a result, in a preferred embodiment, the concentration of hydrogen sulfide of the purified gas is less than about 100 ppb by volume, in particular less than about 50 ppb by volume. This is further diminished by the second wash step removing mainly carbon dioxide, but reducing the hydrogen sulfide content to less than 20 ppb, preferably less than 10 ppb or even less than 1 ppb.

The gas purified in the first absorption provides the feed for a second absorbent solution comprising an alkaline absorbent selected from amines, carbonates and combinations thereof.

### Alkaline absorption

Alkaline washes using aqueous solutions of amine and/or alkaline metal ion compound as calcium formed from calcium oxide as such are known in the field of acid gas purification. In general, the reactions between the acid gases, H₂S and CO₂ are competing against each other for the alkaline reagent. Therefore, introducing alkaline absorption subsequently to the aqueous transition metal wash, which has already removed H₂S, provides unexpected advantages for CO₂ removal. In said alkaline absorption, alkaline absorbent is selected from amines, carbonates, aqueous CaO solution and combinations thereof.

In the context of the present invention, it is understood, that alkaline absorptions are performed using aqueous solutions comprising an amine or a carbonate or comprising amines, carbonates or mixtures thereof. By definition, said washing solutions, absorbent solutions or washing liquids, especially after use, comprise impurities bound thereto, at least as trace amounts also after the optional regeneration.

Preferably said alkaline absorption, hence the contacting of gas obtained after first wash with a second absorbent solution, takes place at a temperature from 10 to 80 °C, preferably from 20 to 40 °C for amine washes and from 70 to 200 °C for carbonate wash. This provides a benefit that the process parameters need not to be altered between two wash stages. Another preferable option is that the temperature of the second wash stage can be selected to be compatible with the process step following thereafter.

### Amine wash

The reaction of amine with H₂S is very fast. The rate determining factor in this reaction is therefore the transition of H₂S to gas/liquid surface. The reaction of amines with CO₂ is slow and is the limiting factor in CO₂ absorption. The reactions between amines and COS, CS₂ and CO₂ consume amines whereby regular purification and adding of fresh amine solution is rendered necessary.

Amines are classified as primary, secondary and tertiary amines depending on the status of the nitrogen atom of the amine i.e. how many carbon atoms are bonded to the amine nitrogen. In the context of acid gas absorption, the primary amines show the highest reactivity.

Primary and secondary amines in general show no specificity towards H₂S or CO₂. Therefore selective removal is not feasible using a primary or secondary amine only. Tertiary amines, though, are suitable for selective H₂S or CO₂ removal, as they exhibit faster reaction rates towards H₂S than CO₂. In the present invention, the selectivity is provided by the first absorption phase, the transition metal wash, and the selectivity of second wash is not crucial. Therefore, the restrictions limiting the traditional amine washes are of minor relevance in the method of the present invention. Selection of a suitable amine is more relaxed and can be made based on criteria other than selectivity.

The most commonly used amines in industrial plants are the alkanolamines. Commercially available are e.g. monoethanolamine (MEA), diethanolamine (DEA), methyldiethanolamine (MDEA). Other chemical providers market reagents 2-(methylaminoethanol), 2-aminohexan-1-ol, diisopropylamine, 2-(2-aminoethoxy)ethanol, methylamine, dimethylamine (DMA) and trimethyamine (TMA) for amine washes. A man skilled in the art is well aware that these reactants can typically be applied together with additives, preferably selected from hydrocarbons substituted with nitrogen, such as piperazine. The additive content can be quite high, but preferably not exceeding 20 mol-% of the amine content. One effect obtained by the use of additives is the decrease of the need for recycling.

Typically the amount of the amine in aqueous absorbent solution is from 5 to 30 wt-%, preferably from 10 to 20 wt-%, the remainder being mainly water. The amine content can also be adjusted to serve the purpose, thus provide the desired CO₂ level. Too low an amine content lowers the absorption efficiency, whereas too high increases the corrosion of the process equipment.

### Carbonate wash

The absorbent solution for alkaline metal ion containing wash can formed by dissolving metal ion containing compound in water. The cation does not form precipitates in the conditions of the wash, but reacts with the acid gases. Commercial processes using hot potassium carbonate (K₂CO₃) are Catacarb and Benfield. The process may further comprise a catalyst or an additive. The additive increases removal efficiency for H₂S, CO₂ and COS, and can typically be selected from amines. Preferable process temperature in carbonate wash is higher than for amine washes, from 70 to 120 °C, or even up to 200 °C in some embodiments, because the increase in temperature increases the absorption respectively. Preferable process pressure is from 10 to 125 bar.

### Carbonate precipitation

For the CO₂ removal, another method available is precipitation with calcium ions. Thus, aqueous alkaline absorbent comprises CaO. According to this embodiment, CaO powder is mixed and at least partially dissolved in water. Ca(OH)₂-water solution is fed into mixed reactor or spray unit for spraying according to routine practice. The pH of this solution is kept alkaline.

In mixed reactor the gas is introduced into the reactor through a sparger and dispersed into small gas bubbles reacting with Ca(OH)₂. CO₂ is precipitated with calcium ions forming solid CaCO₃. Precipitate is removed from the solution and washed gas recovered for further refining.

As an additional benefit in the precipitation process, the alkaline solution also contributes to simultaneous capture of chlorine impurities from the synthesis gas. If the aqueous Ca(OH)₂ solution is recycled, it is led through an ion exchange resin bed where S- and Cl-ions are removed from the solution according to known practice.

According to one specific embodiment of the present invention, the CaCO₃ precipitation as alkaline wash is applied in a plant, which is connected to a pulp and/or paper mill. The CaCO₃ formed in the alkaline wash can be regenerated back to CaO in the lime kiln of the mill exploiting existing facilities. No need for new storages arise, because CaCO₃ is a common ingredient in paper and board mills.

### Possible combinations of alkaline absorptions

As an embodiment of the present invention, after the first absorption step, the amine wash can optionally be followed by another amine wash, carbonate precipitation or carbonate wash. For example, amine wash can be combined with carbonate precipitation, wherein the alkaline cation is selected to form a precipitate which is poorly soluble in water. The precipitate, e.g. CaCO₃ can be used in papermaking. Alternatively, the amine wash can be boosted by a carbonate wash, wherein the cation is selected so that no precipitate is formed. Yet another option is to combine the first absorption step with second absorption, comprising amine wash followed by carbonate wash which is further intensified by carbonate precipitation.

### Energy consumption

The method of the present invention, as defined in claim 1, comprises two chemical absorption steps. In absorption processes, there are three stages determining the energy consumption level. Preferably parameters contributing to low energy consumption are selected.

The first one is the conditioning of the gas (preheating or precooling of the gas) to be washed before feeding to the absorption stage. For chemical absorption the applicable temperature range is much broader and need for thermal conditioning at this stage is typically lower than for physical absorption. In many cases, no conditioning is needed, as the chemical wash can be performed at the temperature of the preceding process step.

As the combination of the two chemical absorption methods according to the present invention is concerned, it is especially beneficial when low temperature waste heat is available, e.g. from adjacent or related processes or process steps. The energy retrievable from such sources is adequate to provide a temperature suitable for these chemical absorption reactions. The energy can be even cost-free.

Herein, according to an embodiment of the invention, both chemical absorption steps can be selected to take place in mutually substantially corresponding conditions. Preferably both chemical absorption steps take place at the same temperature or at the same pressure or both. In other words, contacting of the gas with the second absorbent solution takes place at substantially the same temperature and/or same pressure as said contacting of the gas with the first absorbent solution. More preferably, both of these conditions, temperature and pressure are substantially the same. This provides advantages in the process design and/or in the operation costs, as units for heat exchange or pressurizing are not needed in-between first and second absorption units.

The next energy intensive phase consists of the absorption stages. Therein, depending on the reagents, conditions and level of purity selected, there can be need for cooling or heating the reactor and/or reagents.

The third point where energy consumption must be considered is the regeneration of the absorbent. In case of chemical absorption methods, this is very relevant aspect for energy consumption, because regeneration of chemical absorbents is energy intensive. Savings in regeneration energy produce significant benefits for the overall process.

### Regeneration of the absorbent

As an embodiment of the invention, the method can further comprise regeneration of first or second absorbent solution or optionally both.

Depending on the absorbent and the level of purity required, three procedures for regeneration thereof are known to a man skilled in the art. The most simple and cheapest method for regeneration is the flash regeneration, wherein the absorbent pressure is decreased e.g. gradually. The acid gas concentration is determined by the last step, the pressure of which usually is slightly higher than ambient pressure. By employing vacuum in the last step, the acid gas concentration in the absorbent can further be lowered.

When higher purity is required, the regeneration can be performed by stripping the absorbent with an inert gas. In stripping, the absorbent pressure is lowered and thereafter the partial pressures of the gases to be removed are decreased by feeding inert gas to the reactor. A negative side of this regeneration system is the dilution of the acid gas flow with inert gas used.

Both regeneration methods, flash and stripping, still leave some acid gas to the absorption solvent. For cases, where the level of hydrogen sulfide in the solution to be regenerated is very low, these methods are sufficient. However, for high hydrogen sulfide concentrations regeneration based on solvent boiling e.g. hot regeneration are needed. This provides very high degree of purity for the gas to be washed and additionally high acid gas concentration in the effluent gases. The principle underlying this method is that gas solubility into the absorbent solvent is reduced by rising the temperature. The solvent is heated to its boiling point, whereby the vaporized solvent strips off the impurities. When the vapor is thereafter cooled down and condensed, it can be reused in the absorption. Hot regeneration requires expensive heat exchangers and consumes enormously heat for vaporization of the solvent being the most expensive of the methods mentioned. However, hot regeneration is often necessary for chemical absorbents as the acid gases are chemically bonded thereto. Preferably the regenerated absorption solution can be conditioned and returned to the absorption process.

### Recovery of metal sulfides

Furthermore, from the aqueous solution the metal sulfides having poor solubility to the aqueous media can be removed by any solid liquid separation process. Separation of solids is simple and many separation techniques are available. Metal sulfide precipitate can be further treated to separate the metal and sulfur derivatives and both consequently recovered. For example, when metal sulfide is CuS, separated solid can be utilized as a raw material for copper industry, either for preparation of metallic copper or other copper compounds.

### Use of the purified gas

The purified gas has several uses. It can be used for producing hydrogen, methanol, ethanol, dimethyl ether or aldehydes optionally by hydroformulation or directly used in engines for producing for example electricity.

The purified gas can also be used for producing a hydrocarbon composition containing C₄-C₉₀ hydrocarbons, optionally after further purification. In particular, the hydrocarbon composition can be produced by a Fischer-Tropsch (FT) process.

As a specific embodiment of an overall process, the acid gas removal can be applied in a process for production of hydrocarbons or derivatives thereof from biomass raw material. The method then comprises the steps:
i. gasifying the biomass raw material in the presence of oxygen to produce a gas comprising carbon monoxide, carbon dioxide, hydrogen and hydrocarbons;
ii. optionally a tar reforming step
iii. optionally removing tar components from the gas;
iv. optionally adjusting the hydrogen to carbon monoxide ratio;
v. washing according to claim 1;
vi. converting in a synthesis reactor at least a significant part of the carbon monoxide and hydrogen contained in the gas into a product selected from hydrocarbon composition and derivatives thereof; and
vii. recovering the hydrocarbon or derivative thereof as the product.

According to a preferable embodiment, the steps are taken in said order from i to vii. Even though wash according to claim 1 is here referred to as wash step v, it is understood to comprise all the features of claim 1 as filed.

The removal of H₂S is necessary to protect the synthesis catalysts. Furthermore, when applying this method for hydrocarbon production using FT synthesis, even though CO₂ acts as an inert in the synthesis, it effects the synthesis selectivity guiding towards C₅₊ products, whereby at least partial removal of CO₂ is rendered desirable for the overall process. Contrarily to the processes disclosed in the prior art documents for coal derived syngas purification, the attention in acid gas removal, when applied for biomass originated gas, is mostly paid to CO₂ removal.

Another considerable value in favor of the present process is that high pressure advances both absorption and the subsequent FT synthesis. If the pressure is increased before the absorption or at least before the second wash of the present method, there is no need to alter the pressure after washes. A man skilled in the art apprehends that the increasing the pressure in absorption above the level needed for the level required for FT synthesis is not preferable, though possible. Typically the pressure employed in FT-synthesis is from 20 to 60 bar, preferably from 20 to 30 bar, which practically sets the upper limit to the absorption process.

In an embodiment of this method, use of iron and cobalt as metal ions in the first absorbent solution is advantageous, because they are used in other parts of the overall process, in particular as FT synthesis catalysts. However, copper is the preferably used metal ion, particularly as CuSO₄.

For FT catalytic synthesis, the hydrogen to carbon monoxide molar ratio is preferably from 1.7 to 2.2, advantageously about 2. To adjust the ratio, a man skilled in the art can select between different strategies. Said molar ratio can be adjusted by a water gas shift (WGS) reaction either as sour gas shift or after appropriate gas sweetening, thus gas purification from acid gases. Another approach is to add hydrogen obtained from elsewhere in the process or from another process to adjust said ratio.

COS has a poor solubility to both physical and chemical absorbents causing trouble in purification. To some extent, COS may be hydrolysed in the second absorption step of the present invention. However, sometimes a separate hydrolysis step is needed. According to an embodiment of the above method for hydrocarbon production, step v is preceded by a COS hydrolysis step. Said hydrolysis produces H₂S, which is consequently removed in the first absorption and CO₂, which is removed in the second absorption of the wash process of the present invention. This is beneficial in cases where the synthesis gas contains distracting amounts of COS.

In addition, according to one embodiment, it is also beneficial to operate a water scrubber before the wash steps to minimize NH₃ and HCl in transition metal precipitation stage. Said NH₃ and HCl interfere with metal precipitation stage and their removal contributes to more pure CuS precipitate.

The following experiments were conducted to evidence the concept of the present invention. They should be understood illustrating certain examples of the invention and no limiting by any means.

### Experimental part

The method of the present invention is a two stage washing process.

Absorption using aqueous copper sulfate solution, was described in detail in the applicant's earlier patent application EP11153704. These experiments, now disclosed as examples 1 and 2 apply for the first phase of the present invention as well. In said first phase, the gas to be purified is contacted with a first absorbent solution comprising transition metal ions, said transition metals selected from copper, zinc, iron and cobalt and mixtures thereof, in acidic aqueous solution (in the experiments aqueous CuSO₄ solution); hydrogen sulfide is bound to said first absorbent solution and gas recovered.

The combination of first and second absorption phases is studied as a simulation. Said simulation provides data on the stream compositions and process parameters. Simulation settings and results thus obtained are given as example 3.

### Examples

### Example 1. Semibatch absorption tests of H₂S removal, using aqueous copper sulfate (CuSO₄) as a model absorbent of the first absorbent solution.

### Materials and methods

The experiments were carried out in a micro reactor.

Semibatch absorption tests of H₂S removal, using copper sulfate (CuSO₄)-water solution as absorbent, were carried out in a simple 0.5 liter gas-wash bottle with magnetic stirring, placed in the product line of a micro reactor before the online mass spectrometer.

Absorption tests were carried out at room temperature and atmospheric pressure. Total gas feed flow was 12 liter/h. The basic gas feed composition is shown in Table 1.

**Table 1. Basic feed composition.**

| **Total flow** | **H₂O** | **CO** | **CO₂** | **H₂** | **N₂** | **CH₄** |
|---|---|---|---|---|---|---|
| litre(NTP)/h | vol-% | vol-% | vol-% | vol-% | vol-% | vol-% |
| 12.0 | 36 | 12 | 22 | 24 | 5 | 1 |

The impurity components were purchased from AGA as dilute hydrogen mixture gases H₂S/H₂, COS/H₂ and NH₃/H₂. In the feed, H₂S concentration was 500 ppm (vol) in all experiments. In some tests also 85 ppm COS and 800 ppm NH₃ were used in the feed. However, nearly all COS was hydrolyzed already before the absorption bottle as it was not possible to bypass the catalytic reactor, where COS hydrolysis took place as a side reaction of water gas shift reaction.

The product gas was analyzed online using a mass spectrometer (GC-MS but GC separation not in use). The quantitation limit is dependent on the component, and in these MS measurements quantitation limit was about 1 ppm.

In experiments carried out in laboratory in bubble column described above the following test program was carried out:
- The CuSO₄ concentration varied in different experiments from dilute 50 ppm up to 500 ppm. The mass transfer in the bubble column was enhanced by agitation.
- Absorption rate of H₂S in CuSO₄-water solution was measured at different CuSO₄ concentrations.
- Absorption rate of NH₃ and COS in CuSO₄-water solution at different CuSO₄ concentrations.
- Definition of crystallized Cu-solid components and particle size distribution of crystallized particles.

### Results

The feed rates of different components in synthesis gas are shown in Tables 2 to 4. The compositions of effluent gas in different experiments are shown as a function of time in:
- table 2 indicating the results of Test 1;
- table 3 indicating the results of Test 2; and
- table 4 indicating the results of Test 3.

**Table 2. Test 1 - CuSO₄ conc. 0.01 wt-%, H₂S concentration in feed gas 500 ppm.**

| Time | Effluent concentration of compounds in vol-% (except H₂S as ppmᵥ) | | | | | | |
|---|---|---|---|---|---|---|---|
| (h:min) | CO₂ | CH₄ | COS | HCl | NH₃ | H₂O | H₂S |
| 9:33 | 41.5 | 0.65 | 0.0000 | 0.0000 | 0.00 | 28.5 | 398 |
| 9:44 | 37.8 | 0.56 | 0.0000 | 0.0000 | 0.00 | 78.5 | 233 |
| 9:47 | 37.8 | 0.56 | 0.0000 | 0.0000 | 0.00 | 78.5 | 156 |
| 9:49 | 37.8 | 0.56 | 0.0000 | 0.0000 | 0.00 | 78.5 | 119 |
| 9:51 | 37.8 | 0.56 | 0.0000 | 0.0000 | 0.00 | 78.5 | 97 |
| 10:28 | 41.0 | 0.61 | 0.0000 | 0.0000 | 0.00 | 75.4 | 0 |
| 12:22 | 41.4 | 0.59 | 0.0000 | 0.0000 | 0.00 | 76.8 | 170 |
| 12:25 | 41.4 | 0.59 | 0.0000 | 0.0000 | 0.00 | 76.8 | 235 |
| 12:27 | 41.4 | 0.59 | 0.0000 | 0.0000 | 0.00 | 76.8 | 276 |
| 12:29 | 41.4 | 0.59 | 0.0000 | 0.0000 | 0.00 | 76.8 | 278 |
| 13:42 | 41.5 | 0.57 | 0.0000 | 0.0000 | 0.00 | 78.2 | 295 |
| 13:45 | 41.5 | 0.57 | 0.0000 | 0.0000 | 0.00 | 78.2 | 331 |
| 13:47 | 41.5 | 0.57 | 0.0000 | 0.0000 | 0.00 | 78.2 | 336 |
| 13:49 | 41.5 | 0.57 | 0.0000 | 0.0000 | 0.00 | 78.2 | 335 |
| 14:43 | 41.4 | 0.56 | 0.0000 | 0.0000 | 0.00 | 76.7 | 306 |
| 15:11 | 41.2 | 0.54 | 0.0000 | 0.0000 | 0.00 | 76.7 | 310 |

**Table 3. Test 2 - CuSO₄ conc. 0.01 wt-%, H₂S concentration in feed gas 500 ppm, NH₃ 800 ppm, COS 85 ppm.**

| Time (h:min) | Effluent concentration of compounds in vol-% (except H₂S as ppmᵥ) | | | | | | |
|---|---|---|---|---|---|---|---|
| | CO₂ | CH₄ | COS | HCl | NH₃ | H₂O | H₂S |
| 9:53 | 45.4 | 1.00 | 0.0002 | 0.0000 | 0.14 | 15.1 | 412 |
| 10:10 | 40.2 | 1.01 | 0.0000 | 0.0000 | 0.29 | 33.9 | 37 |
| 10:13 | 40.2 | 1.01 | 0.0000 | 0.0000 | 0.29 | 33.9 | 26 |
| 10:15 | 40.2 | 1.01 | 0.0000 | 0.0000 | 0.29 | 33.9 | 24 |
| 10:17 | 40.2 | 1.01 | 0.0000 | 0.0000 | 0.29 | 33.9 | 8 |
| 10:45 | 43.1 | 0.98 | 0.0000 | 0.0000 | 0.31 | 35.8 | 0 |
| 12:14 | 44.5 | 0.93 | 0.0002 | 0.0000 | 0.32 | 36.9 | 138 |
| 12:17 | 44.5 | 0.93 | 0.0002 | 0.0000 | 0.32 | 36.9 | 225 |
| 12:19 | 44.5 | 0.93 | 0.0002 | 0.0000 | 0.32 | 36.9 | 249 |
| 12:21 | 44.5 | 0.93 | 0.0002 | 0.0000 | 0.32 | 36.9 | 287 |
| 13:20 | 43.8 | 0.93 | 0.0003 | 0.0000 | 0.31 | 36.3 | 227 |
| 13:23 | 43.8 | 0.93 | 0.0003 | 0.0000 | 0.31 | 36.3 | 288 |
| 13:25 | 43.8 | 0.93 | 0.0003 | 0.0000 | 0.31 | 36.3 | 298 |
| 13:27 | 43.8 | 0.93 | 0.0003 | 0.0000 | 0.31 | 36.3 | 306 |
| 14:42 | 44.5 | 0.89 | 0.0000 | 0.0000 | 0.36 | 36.6 | 311 |
| 14:45 | 44.5 | 0.89 | 0.0000 | 0.0000 | 0.36 | 36.6 | 323 |
| 14:47 | 44.5 | 0.89 | 0.0000 | 0.0000 | 0.36 | 36.6 | 326 |
| 14:49 | 44.5 | 0.89 | 0.0000 | 0.0000 | 0.36 | 36.6 | 349 |
| 15:16 | 44.6 | 0.87 | 0.0001 | 0.0000 | 0.32 | 36.6 | 328 |

**Table 4. Test 3 - CuSO₄ conc. 0.0051 wt-%, H2S concentration in feed gas 500 ppm, NH3 800 ppm, COS 85 ppm.**

| Time (h:min) | Effluent concentration of compounds in vol-% (except H₂S as ppmᵥ) | | | | | | |
|---|---|---|---|---|---|---|---|
| | CO₂ | CH₄ | COS | HCl | NH₃ | H₂O | H₂S |
| 10:43 | 45.8 | 0.88 | 0.0002 | 0.0000 | 0.14 | 14.9 | 417 |
| 10:51 | 40.5 | 0.43 | 0.0000 | 0.0000 | 0.50 | 56.1 | 387 |
| 10:54 | 40.5 | 0.43 | 0.0000 | 0.0000 | 0.50 | 56.1 | 325 |
| 10:56 | 40.5 | 0.43 | 0.0000 | 0.0000 | 0.50 | 56.1 | 254 |
| 10:58 | 40.5 | 0.43 | 0.0000 | 0.0000 | 0.50 | 56.1 | 198 |
| 11:10 | 40.1 | 0.93 | 0.0000 | 0.0000 | 0.30 | 33.3 | 5 |
| 11:13 | 40.1 | 0.93 | 0.0000 | 0.0000 | 0.30 | 33.3 | 0 |
| 11:15 | 40.1 | 0.93 | 0.0000 | 0.0000 | 0.30 | 33.3 | 24 |
| 11:17 | 40.1 | 0.93 | 0.0000 | 0.0000 | 0.30 | 33.3 | 18 |
| 11:28 | 43.0 | 0.88 | 0.0000 | 0.0000 | 0.30 | 35.9 | 64 |
| 11:31 | 43.0 | 0.88 | 0.0000 | 0.0000 | 0.30 | 35.9 | 68 |
| 11:33 | 43.0 | 0.88 | 0.0000 | 0.0000 | 0.30 | 35.9 | 78 |
| 11:35 | 43.0 | 0.88 | 0.0000 | 0.0000 | 0.30 | 35.9 | 91 |
| 11:50 | 44.3 | 0.84 | 0.0000 | 0.0000 | 0.33 | 38.5 | 177 |
| 11:53 | 44.3 | 0.84 | 0.0000 | 0.0000 | 0.33 | 38.5 | 205 |
| 11:55 | 44.3 | 0.84 | 0.0000 | 0.0000 | 0.33 | 38.5 | 210 |
| 11:57 | 44.3 | 0.84 | 0.0000 | 0.0000 | 0.33 | 38.5 | 226 |
| 12:16 | 44.9 | 0.81 | 0.0000 | 0.0000 | 0.34 | 38.0 | 281 |
| 12:19 | 44.9 | 0.81 | 0.0000 | 0.0000 | 0.34 | 38.0 | 295 |
| 12:21 | 44.9 | 0.81 | 0.0000 | 0.0000 | 0.34 | 38.0 | 316 |
| 12:23 | 44.9 | 0.81 | 0.0000 | 0.0000 | 0.34 | 38.0 | 322 |
| 13:15 | 45.7 | 0.78 | 0.0000 | 0.0000 | 0.34 | 38.5 | 329 |
| 13:18 | 45.7 | 0.78 | 0.0000 | 0.0000 | 0.34 | 38.5 | 361 |
| 13:20 | 45.7 | 0.78 | 0.0000 | 0.0000 | 0.34 | 38.5 | 370 |
| 13:22 | 45.7 | 0.78 | 0.0000 | 0.0000 | 0.34 | 38.5 | 368 |
| 14:24 | 44.9 | 0.77 | 0.0000 | 0.0000 | 0.33 | 37.5 | 326 |
| 14:27 | 44.9 | 0.77 | 0.0000 | 0.0000 | 0.33 | 37.5 | 350 |
| 14:29 | 44.9 | 0.77 | 0.0000 | 0.0000 | 0.33 | 37.5 | 358 |
| 14:31 | 44.9 | 0.77 | 0.0000 | 0.0000 | 0.33 | 37.5 | 361 |

### Conclusions

CuSO₄ was capable of removing 500 ppm H₂S (mol-frac) completely from feed gas both with 0.01 and 0.005 wt-% aqueous solutions. The product is solid CuS deposit.
- CuSO₄ was able to remove 800 ppm NH₃ (mol-frac) in feed gas down to a concentration of 40 ppm both with 0.01 and 0.005 wt.% aqueous solutions. The product was (NH₄)₂SO₄ dissolved in absorbent solution.
- Too high pH resulted in deposition of e.g. metal hydroxides or carbonates in which case no or less hydrogen sulfide was removed. Carbonate formation was also dependent on CO₂ partial pressure.
- NH₃ and COS in the feed did not influence H₂S removal by copper sulfate.

### Example 2. Absorption test for H₂S removal from syngas in packed bed absorption column.

Absorption tests for H₂S removal from syngas in packed bed absorption column were carried out in a Pilot scale test unit. The absorber performance was tested in a syngas preparation plant in Varkaus, Finland.

Absorber details and data sheets are shown below:
Absorber:
   - packed bed absorber, packing metal, 2-in or 50 mm, surface area 100 m²/m³,
   - height: 9 m, diameter 0.1 m.
Feed Gas:
   - feed rate: 50-60 kg/h
   - pressure 30 bar, temperature 25 °C
   - Composition/mol-%: CO 20, CO₂ 40, H₂, CH₄, NH₃, H₂S, COS, naphthalene 2000 ppm, benzene 200 ppm
Absorbent Feed:
   - CuSO₄ -water, concentration 0.15 wt-%
   - Feed rate was varied, equivalent Cu²⁺ molar feed ratio to H₂S 1.5-6

The mol-% of H₂S in effluent gas was measured by GPC analysis. The measured H₂S mole fraction in effluent syngas was at minimum 70 ppb at equivalent Cu²⁺ molar feed ratio to H₂S value of 6.

As a result, the correlation between product gas S concentration and stoichiometric Cu/S ratio in the feed was determined. For stoichiometric ratios from 1 to 5 almost linear correlation was observed, wherein the stoichiometric ratio of 1.5 for Cu/S led to less than 3 ppmᵥ H₂S and ratio 5 led to 90 ppbᵥ H₂S in the product gas.

### Example 3. A simulation of the method for washing hydrogen sulfide and carbon dioxide according to the present invention combining a CuSO₄ wash and an amine wash.

In this example a two-stage wash according to one embodiment of the invention was simulated. The first step with aqueous CuSO₄ as absorption solution was simulated with Aspen Plus flow sheeting program with the following process parameters:
- The absorber models are rate-based models realized in Radfrac
- The physical property and VLE method of ELECNRTL
- All reactions, except for Cu-reaction, Henry-components, parameters, etc. are set as Aspen Plus defaults and realized through the Electrolyte wizard

The second wash step, contacting recovered gas from step c with a second absorbent solution comprising an alkaline absorbent was simulated with ProTreat simulator. This simulator is especially suitable for amine wash simulations.

The results from the simulations are given in two tables. First, table 5 discloses hourly flows of the main components as moles. It gives calculated feed and treated gas compositions. From the same simulation data, also operating conditions were calculated. The second table (table 6) gives in comparison to methanol wash calculated energy consumption values exhibiting the good energy economy of the method according to the present invention. Table 5. Two stage wash according to an embodiment of the invention.

| **Mole flow [kmol/h]** | **Syngas in** | **Syngas out** |
|---|---|---|
| H₂S | 1.05 | 2.21*10⁻⁴ |
| CO₂ | 3340 | 241.5 |
| CO | 2876 | 2873 |
| H₂ | 5753 | 5745 |

From these results, it can be concluded that said combination of aqueous CuSO₄ wash and amine wash removes H₂S and CO₂ effectively.

**Table 6. Energy consumption as steam and electricity used for the absorption steps.**

| **Wash** | **LP steam (MW)** | **Electricity (MW)** |
|---|---|---|
| MeOH | 46 | 26 |
| CuS0₄+Amine | 30 | 7 |

These results confirm the effect of the present method for both the steam and electricity consumption. It verifies the energy efficiency of the removal of sulfur components and carbon dioxide from the syngas.

## Claims

1. A method for washing hydrogen sulfide and carbon dioxide from a gas obtainable by gasification of carbonaceous biomaterial, said method comprising:
a. contacting said gas with a first absorbent solution comprising transition metal ions, said transition metals selected from copper, zinc, iron and cobalt and mixtures thereof, in acidic aqueous solution;
b. binding hydrogen sulfide to said first absorbent solution;
c. recovering the gas from step b;
d. contacting recovered gas from step c with a second absorbent solution comprising an alkaline absorbent;
e. binding carbon dioxide to said second absorbent solution; and
f. recovering the washed gas from step e.

2. The method according to claim 1, wherein the concentration of the transition metal ion in the wash solution is less than about 1000 weight-ppm, and preferably less than about 100 weight-ppm, calculated from the weight of the first absorbent solution.

3. The method according to claim 1 or 2, wherein said transition metal ions comprise copper, preferably as CuSO₄.

4. The method according to claim 1 wherein the contacting of said gas with a first absorbent solution takes place at a temperature from 10 to 80 °C and at a pressure from 1 to 40 bar.

5. The method according to claim 1 wherein the contacting of said gas with a second absorbent solution takes place at a temperature from 10 to 80 °C, preferably from 20 to 40 °C.

6. The method according to claim 1, 4 or 5 wherein the contacting of said gas with a second absorbent solution takes place at substantially the same temperature and/or same pressure as said contacting of the gas with the first absorbent solution.

7. The method according to any one of the preceding claims wherein the H₂S level of the gas recovered from step f is less than 20 ppb, preferably less than 1 ppb.

8. The method according to claim 1, wherein said first and/or second absorbent solution is/are regenerated after gas recovery.

9. A method for producing hydrocarbons or derivatives thereof from biomass raw material comprising the steps:
i. gasifying the biomass raw material in the presence of oxygen to produce a gas comprising carbon monoxide, carbon dioxide, hydrogen and hydrocarbons;
ii. optionally a tar reforming step
iii. optionally removing tar components from the gas;
iv. optionally adjusting the hydrogen to carbon monoxide ratio;
v. washing hydrogen sulfide and carbon dioxide from a gas according to claim 1;
vi. converting in a synthesis reactor at least a significant part of the carbon monoxide and hydrogen contained in the gas into a product selected from hydrocarbon composition and derivatives thereof; and
vii. recovering the hydrocarbon or derivative thereof as the product.

10. A method according to claim 9, wherein step v is preceded by a COS hydrolysis step.

11. The method according to any one of the preceding claims, wherein said alkaline absorbent is selected from amines, carbonates, aqueous CaO solution and combinations thereof.

12. The method according to any one of the preceding claims, wherein said second absorbent solution is applied as an aqueous amine wash, carbonate wash, carbonate precipitation or a combination thereof.

## Patentansprüche

1. Verfahren zum Waschen von Hydrogensulfid und Kohlenstoffdioxid aus einem durch Vergasung von kohlehaltigem Biomaterial erhältlichen Gas, das Verfahren umfassend:
a. Kontaktieren des Gases mit einer ersten Absorptionsmittellösung, umfassend Übergangsmetallionen, die Übergangsmetalle ausgewählt aus Kupfer, Zink, Eisen und Kobalt und Mischungen davon, in saurer wässriger Lösung;
b. Binden von Hydrogensulfid an die erste Absorptionsmittellösung;
c. Rückgewinnen des Gases aus Schritt b;
d. Kontaktieren des rückgewonnenen Gases aus Schritt c mit einer zweiten Absorptionsmittellösung umfassend ein alkalisches Absorptionsmittel;
e. Binden von Kohlenstoffdioxid an die zweite Absorptionsmittellösung; und
f. Rückgewinnen des gewaschenen Gases aus Schritt e.

2. Verfahren nach Anspruch 1, wobei die Konzentration des Übergangsmetallions in der Waschlösung weniger als ungefähr 1000 Gew.-ppm, und bevorzugt weniger als ungefähr 100 Gew.-ppm, berechnet von dem Gewicht der ersten Absorptionsmittellösung, ist.

3. Verfahren nach Anspruch 1 oder 2, wobei die Übergangsmetallionen Kupfer, bevorzugt als CuSO₄, umfassen.

4. Verfahren nach Anspruch 1, wobei das Kontaktieren des Gases mit einer ersten Absorptionsmittellösung bei einer Temperatur von 10 bis 80°C und bei einem Druck von 1 bis 40 Bar stattfindet.

5. Verfahren nach Anspruch 1, wobei das Kontaktieren des Gases mit einer zweiten Absorptionsmittellösung bei einer Temperatur von 10 bis 80°C, bevorzugt von 20 bis 40°C stattfindet.

6. Verfahren nach Anspruch 1, 4 oder 5, wobei das Kontaktieren des Gases mit einer zweiten Absorptionsmittellösung bei im Wesentlichen der gleichen Temperatur und/oder gleichem Druck wie das Kontaktieren des Gases mit der ersten Absorptionsmittellösung stattfindet.

7. Verfahren nach einem der vorstehenden Ansprüche, wobei das H₂S Level des aus Schritt f rückgewonnenen Gases weniger als 20 ppb, bevorzugt weniger als 1 ppb ist.

8. Verfahren nach Anspruch 1, wobei die erste und/oder zweite Absorptionsmittellösung nach Gasrückgewinnung regeneriert ist/sind.

9. Verfahren zum Herstellen von Kohlenwasserstoffen oder Derivaten davon aus Biomasserohmaterial, umfassend die Schritte:
i. Vergasen des Biomasserohmaterials in der Gegenwart von Sauerstoff, um ein Kohlenstoffmonoxid, Kohlenstoffdioxid, Wasserstoff und Kohlenwasserstoffe umfassendes Gas herzustellen;
ii. optional einen Teerreformierungsschritt
iii. optional Entfernen von Teerkomponenten aus dem Gas;
iv. optional Anpassen des Wasserstoff-zu-Kohlenstoffmonoxid-Verhältnisses;
v. Waschen von Hydrogensulfid und Kohlenstoffdioxid aus einem Gas nach Anspruch 1;
vi. Umwandeln in einem Synthesereaktor zumindest einen signifikanten Teil des Kohlenmonoxids und Wasserstoffs enthalten in dem Gas in ein Produkt ausgewählt aus Kohlenwasserstoffzusammensetzung und Derivaten davon; und
vii. Rückgewinnen des Kohlenwasserstoffs oder Derivats davon als das Produkt.

10. Verfahren nach Anspruch 9, wobei Schritt v ein COS Hydrolyseschritt vorausgeht.

11. Verfahren nach einem der vorstehenden Ansprüche, wobei das alkalische Absorptionsmittel ausgewählt ist aus Aminen, Carbonaten, wässriger CaO-Lösung und Kombinationen davon.

12. Verfahren nach einem der vorstehenden Ansprüche, wobei die zweite Absorptionsmittellösung angewendet ist als wässrige Aminwäsche, Carbonatwäsche, Carbonatpräzipitation oder eine Kombination davon.

## Revendications

1. Procédé pour l'élimination de sulfure d'hydrogène et de dioxyde de carbone d'un gaz pouvant être obtenu par gazéification d'un biomatériau carboné, ledit procédé comprenant :
a. mettre en contact ledit gaz avec une première solution absorbante comprenant des ions de métaux de transition, lesdits métaux de transition étant choisis parmi le cuivre, le zinc, le fer et le cobalt et leurs mélanges, en solution aqueuse acide;
b. la liaison du sulfure d'hydrogène à ladite première solution absorbante;
c. récupérer le gaz de l'étape b;
d. mettre en contact le gaz récupéré de l'étape c avec une seconde solution absorbante comprenant un absorbant alcalin;
e. lier du dioxyde de carbone à ladite seconde solution absorbante; et
f. récupérer le gaz lavé de l'étape e.

2. Le procédé selon la revendication 1, dans lequel la concentration des ions de métaux de transition dans la solution de lavage est inférieure à environ 1000 ppm en poids, et de préférence inférieure à environ 100 ppm en poids, calculée à partir du poids de la première solution absorbante.

3. Le procédé selon la revendication 1 ou 2, dans lequel lesdits ions de métaux de transition comprennent du cuivre, de préférence sous la forme CuSO₄.

4. Le procédé selon la revendication 1, dans lequel la mise en contact dudit gaz avec une première solution absorbante a lieu à une température de 10°C à 80°C et à une pression de 1 bar à 40 bars.

5. Le procédé selon la revendication 1, dans lequel la mise en contact dudit gaz avec une seconde solution absorbante a lieu à une température de 10°C à 80°C, de préférence de 20°C à 40°C.

6. Le procédé selon la revendication 1, 4 ou 5, dans lequel la mise en contact dudit gaz avec une seconde solution absorbante a lieu sensiblement à la même température et/ou à la même pression que ladite mise en contact du gaz avec la première solution absorbante.

7. Le procédé selon l'une quelconque des revendications précédentes, dans lequel le niveau de H₂S du gaz récupéré de l'étape f est inférieur à 20 ppb, de préférence inférieur à 1 ppb.

8. Le procédé selon la revendication 1, dans lequel ladite première et/ou seconde solution absorbante est/sont régénérées après récupération de gaz.

9. Un procédé pour produire des hydrocarbures ou des dérivés de ceux-ci à partir d'une matière première de biomasse comprenant les étapes suivantes:
i. gazéifier la matière première de biomasse en présence d'oxygène pour produire un gaz comprenant du monoxyde de carbone, du dioxyde de carbone, de l'hydrogène et des hydrocarbures;
ii. éventuellement une étape de reformage du goudron ;
iii. enlever éventuellement les composants de goudron du gaz;
iv. ajuster éventuellement le rapport de l'hydrogène au monoxyde de carbone;
v. éliminer du sulfure d'hydrogène et du dioxyde de carbone à partir d'un gaz selon la revendication 1;
vi. convertir dans un réacteur de synthèse au moins une partie significative du monoxyde de carbone et de l'hydrogène contenus dans le gaz en un produit choisi parmi une composition d'hydrocarbures et ses dérivés; et
vii. récupérer l'hydrocarbure ou son dérivé en tant que produit.

10. Le procédé selon la revendication 9, dans lequel l'étape v est précédée d'une étape d'hydrolyse COS.

11. Le procédé selon l'une quelconque des revendications précédentes, dans lequel ledit absorbant alcalin est choisi parmi des amines, des carbonates, une solution aqueuse de CaO et leurs combinaisons.

12. Le procédé selon l'une quelconque des revendications précédentes, dans lequel ladite seconde solution absorbante est appliquée sous la forme d'un lavage aqueux à l'amine, d'un lavage au carbonate, d'une précipitation au carbonate ou d'une combinaison de ceux-ci.
